# EUROPÄISCHE PATENTANMELDUNG

(11) **EP 0 605 025 A1**
(43) Veröffentlichungstag der Anmeldung: **06.07.1994**
(21) Anmeldenummer: 93203229.5
(22) Anmeldetag: 18.11.1993
(51) Int. Cl.: B29C 45/12, B29C 45/40, B29C 45/42

(54) **Spritzgiess- oder Spritzprägemaschine**

(30) Priorität: 26.11.1992 DE 4239776
(71) Anmelder: POLYGRAM MANUFACTURING & DISTRIBUTION CENTRES GMBH, D-30851 Langenhagen (DE); Polygram International Holding B.V., NL-3743 DN Baarn (NL)
(72) Erfinder: Becker, Jürgen, D-30890 Barsinghausen (DE); Eggers, Gerhard, D-30918 Isernhagen (DE); Schrode, Erhard, D-31275 Lehrte (DE); Tiebel, Rainer, D-30900 Wedemark (DE)
(74) Vertreter: Erdmann, Anton, Dipl.-Ing.

(57) **Zusammenfassung**

Die Erfindung bezieht sich auf eine Spritzgieß- oder Spritzprägemaschine zur Herstellung von scheibenförmigen Informationsträgern, z.B. CD's, mit einer Spritzeinrichtung (10 - 15), mit einer ein festes (17) und ein bewegliches (18) Teil aufweisenden Formeinrichtung (16) und mit einer Schließeinrichtung (26) für das bewegliche Teil (18). Um die Anzahl der pro Arbeitstakt erzeugten Informationsträger zu erhöhen, sollen mindestens zwei nebeneinander angeordnete, separat montierte und temperierte Formen (23, 24), jeweils ein eigenes Spritzaggregat (10a, b) für jede Form und eine einzige Schließeinheit (26) für alle Formen vorgesehen sein.

## Beschreibung

Die Erfindung bezieht sich auf eine Spritzgieß- oder Spritzprägemaschine zur Herstellung von scheibenförmigen Informationsträgern, z.B. Compact Disc's, mit einer Spritzeinrichtung, mit einer ein festes und ein bewegliches Teil aufweisenden Formeinrichtung und mit einer Schließeinrichtung für das bewegliche Teil. Die Erfindung bezieht sich ferner auf ein Verfahren zur Herstellung von Informationsträgern mittels eines Spritzgieß- oder Spritzprägeverfahrens auf einer Maschine der eingangs genannten Art.

Derartige Spritzgieß- bzw. Spritzprägemaschinen sind bekannt. Bei den bekannten Maschinen besitzt die Formeinrichtung jeweils nur eine ein bewegliches und ein festes Formteil aufweisende Form und ein Spritzaggregat, so daß je Zyklus nur ein Substrat gespritzt werden kann.

In der allgemeinen Spritzgießfertigung für Kunststoffe ist es Stand der Technik, daß zur Erhöhung der Produktivität und damit zur Kostensenkung neben einer allgemeinen Taktzeitreduzierung auch Formen mit mehreren Kavitäten eingesetzt werden, um die Anzahl gefertigter Teile pro Maschinenstunde zu erhöhen. Dies bietet keine Schwierigkeiten, solange einfache Teile gespritzt werden sollen, z.B. einfache Kunststoffbecher.

Dagegen ist bei der Fertigung von hochwertigen, optisch auslesbaren Datenträgern aus z.B. Polykarbonat (CD-Fertigung) bisher nur die allgemeine Taktzeitverkürzung wirtschaftlich erfolgreich realisiert worden. Bekannt ist in diesem Zusammenhang zwar auch, Doppelformen mittels Heißkanaltechnik aus einem einzigen Spritzaggregat zu befüllen, wobei die Massestromaufteilung mittels eines sich zweigenden Heißkanals erfolgt. Versuche haben jedoch gezeigt, daß die bei einer CD gestellten Anforderungen (z.B. definierte und uniforme Pitabbildung, geringe und uniforme Spannungsverteilung im Hinblick auf Doppelbrechung, extrem geringer Verzug) nur schwer zu erreichen sind, wenn auch hier eine geringe Fehlerrate und eine durch die Verkettung mit anderen Anlagen nötige hohe Verfügbarkeit gefordert werden. Ein wesentlicher Faktor dabei ist das zu verarbeitende Polycarbonat mit seinen für die geforderte Abbildung der Feinstrukturen ungünstigen Fließeigenschaften und der relativ geringen Wärmestabilität. Bei einer derartigen Doppelform ist es äußerst schwierig, den aus einem einzigen Spritzaggregat kommenden Schmelzestrom mittels eines Heißkanals so aufzuteilen, daß in beiden Formen gleichmäßige Füllvorgänge stattfinden. Insbesondere auch die für die Doppelbrechung wichtigen Nachdruckverhältnisse sind über einen längeren Zeitraum kaum reproduzierbar in den nötigen Grenzen zu gewährleisten. Eine derartige Technik hat somit eine schwankende Produktqualität, erhöhten Ausschuß und vermehrten Stillstand, bedingt durch Einrichtaufwand, zur Folge.

Durch die DE-PS 12 15 353 ist eine Spritzgießmaschine zur Verarbeitung thermoplastischer Kunststoffe mit mindestens zwei je von einem gesonderten Spritzaggregat bedienten Spritzgießformen bekannt geworden. Die Spritzgießformen bestehen jeweils aus zwei relativ zueinander bewegbaren Teilen, nämlich aus einer Angußformhälfte und einer Gegenformhälfte, wobei beide Anguß- und Gegenformhälften während des Spritzens aufeinander gepreßt sind. Die Anordnung ist so getroffen, daß zwei auf axial bewegbaren Formträgern angeordnete Angußformhälften in einiger Entfernung einander gegenüberliegend angeordnet sind und daß sich zwischen diesen Angußformhälften ein in gleicher axialer Richtung bewegbarer Träger befindet, auf dem, einander gegenüberliegend und in einiger Entfernung voneinander, die Gegenformhälften befestigt sind. Dabei liegen die beiden Spritzaggregate auf einer Achse und sind den beiden Angußformhälften zugeordnet. Zur Schließung dient eine einzige Formschließvorrichtung, die auf eine der zwei einander gegenüberliegenden Angußformhälften einwirkt und über den axial bewegbaren Gegenformträger die zwei einander gegenüberliegenden Formen schließt.

Der Erfindung liegt die Aufgabe zugrunde, ohne Kapazitäts- und Qualitätseinbußen unter den derzeit für eine Einzelformtechnik üblichen Bedingungen die Anzahl der pro Arbeitstakt erzeugten Informationsträger zu erhöhen.

Diese Aufgabe wird bei einer Spritzgieß- oder Spritzprägemaschine der eingangs genannten Art gelöst durch folgende Merkmale:
a) mindestens zwei nebeneinander angeordnete, separat montierte und temperierte Formen, die jeweils ein festes und ein bewegliches Formteil aufweisen,
b) ein eigenes Spritzaggregat für jede Form und
c) eine einzige Schließeinheit für alle Formen.

Damit kann die Kunststoff-Schmelzaufbereitung und der Einspritzvorgang individuell auf die jeweilige Form/Matrize im Hinblick auf die Erreichung optimaler Qualität bzw. minimaler Fehlerraten eingestellt werden. Gemäß der Erfindung können somit die Plastifizierung, der Einspritzvorgang und die Nachdruckregelung individuell für jede der Formen in der erforderlichen Präzision gewährleistet werden. Durch diese Möglichkeit der individuellen Anpassung von Aggregat zur Form läßt sich eine optimale Prozeßbeherrschung und damit Produktqualität hinsichtlich der Pitabbildung, der Doppelbrechung und weiterer Merkmale erreichen und über lange Produktionsperioden sicherstellen.

Im Vergleich zu einer Bauart mit nur einer Form und mit einem Spritzaggregat ergibt sich damit ein geringerer Energieaufwand zur Herstellung einer gleich großen Anzahl von Informationsträgern, ein geringerer Platzbedarf, geringere Investitionskosten und ein geringerer Wartungsaufwand.

In Ausgestaltung der Erfindung weisen dabei die beiden körperlich voneinander getrennten Spritzaggregate je einen separaten hydraulischen Verteilerblock mit Steuer- und Regelventilen auf, deren Funktionen unabhängig voneinander durch eine Maschinensteuerung vorgegeben werden. Diese Bauweise gewährleistet eine einfache und zuverlässige Zufuhr von Spritzmaterial.

In Ausgestaltung der Erfindung sind die Spritzaggregate in einer horizontalen Ebene in Richtung der Schließbewegung der Schließeinheit angeordnet und liegen in der horizontalen Ebene symmetrisch zur Mittellinie der Schließeinheit. Diese Anordnung ermöglicht eine einfache Handhabung von beiden Seiten. Dabei sind die Spritzaggregate z.B. entweder mit einer offenen Düse oder mit einer Verschlußdüse ausgerüstet.

In weiterer Ausgestaltung der Erfindung ist die Schließeinheit mit einer für alle Formen angepaßten Schließkraft einstellbar ausgebildet. Je nach Anzahl der verwendeten Formen kann dabei die Schließkraft individuell angepaßt und eingestellt werden.

In weiterer Ausgestaltung der Erfindung ist vorgesehen, daß die beweglichen und die festen Formteile aller Formen jeweils auf einem gemeinsamen Formkörper angeordnet sind und daß die Formkörper jeweils quer zur Schließrichtung in Formplatten ein- und ausschiebbar ausgebildet sind. Dazu ist vorzugsweise jeweils eine hydraulisch, pneumatisch oder elektromotorisch angetriebene Verschiebeeinrichtung vorgesehen. Durch diese Bauweise können bei einem Matrizen- oder Formteilwechsel oder bei Reinigungs- oder Inspektionsarbeiten geringe Stillstandszeiten der Maschine erreicht werden.

Die Formplatten weisen Werkzeugspannflächen zur Aufnahme der die beweglichen und festen Formteile tragenden Formkörper, Einstellschrauben zur Justierung der Parallelität der Formplatten und Schnellspannsysteme für die Formplatten auf. Die hydraulisch, pneumatisch oder elektromotorisch angetriebenen Werkzeugschnellspannsysteme dienen zum schnellen Lösen und Spannen der Formkörper bei einem Form- oder Matrizenwechsel.

In weiterer Ausgestaltung der Erfindung weist die bewegliche Formplatte einen Antrieb für einen Platten- und Angußausstoßer auf, der körperlich keine feste Verbindung mit dem beweglichen Formkörper hat und bündig mit der Aufspannfläche der Formplatte abschließt, so daß keine Teile vorstehen. Diese Bauweise ermöglicht ein problemloses Herausschieben des Formkörpers aus dem Arbeitsbereich ohne Entkupplungsaufwand.

Die hydraulische Versorgung der Spritzaggregate erfolgt in weiterer Ausgestaltung der Erfindung über zwei getrennte Pumpensysteme. Alternativ kann zusätzlich je Pumpensystem ein Druckspeicher eingebaut werden. Damit kann ein Mindestmaß an Variation von Prozeßparametern und Produktqualität erreicht werden.

Schließlich ist in weiterer Ausgestaltung der Erfindung eine für alle gefertigten Informationsplatten einschließlich ihrer Angüsse ausgebildete Teileentnahmeeinrichtung vorgesehen. Damit können auf einfache Weise sowohl alle gefertigten Platten als auch ihre abgetrennten Angüsse gleichzeitig aus den Formen entnommen und aus dem Aufspannbereich transportiert werden.

Die Steuerung und die Maschine sind derart ausgelegt, daß sowohl im Spritzgieß- als auch im Spritzprägeverfahren gearbeitet werden kann.

Eine bevorzugte Ausgestaltung der Erfindung besteht darin, daß die Formeinrichtung zwei in einer horizontalen Ebene nebeneinanderliegende Formen aufweist, denen jeweils ein eigenes Spritzaggregat zugeordnet ist. Mit einer derartigen Bauweise können je Zyklus doppelt so viel Informationsplatten hergestellt werden wie bei einer Spritzgießmaschine mit nur einer Form und einem Spritzaggregat. Eine derart aufgebaute Doppelform-Spritzgießmaschine bzw.-Spritzprägemaschine besitzt von beiden Seiten eine gleich gute Zugänglichkeit.

Ein einfaches Verfahren zur Herstellung scheibenförmiger Informationsträger mittels eines Spritzgieß- oder Spritzprägeverfahrens auf einer Maschine gemäß der Erfindung ist dadurch gekennzeichnet,
a) daß die bewegliche Formplatte und alle Spritzaggregate gemeinsam aktiviert werden,
b) daß alle Formen gemeinsam geschlossen werden, indem die einzige Schließeinheit die bewegliche Formplatte mit den beweglichen Formteilen auf die festen Formteile preßt,
c) daß alle Formen gleichzeitig mit Preßmaterial gefüllt werden,
d) daß die bewegliche Formplatte nach dem Preßvorgang um einen bestimmten Betrag zurückbewegt wird,
e) daß die gepreßten Platten nach Aktivierung des Angußausstoßers von der Entnahmeeinrichtung entnommen werden und
f) daß durch erneutes Aktivieren der beweglichen Formplatte und der Spritzaggregate ein erneuter Preßvorgang eingeleitet wird.

In der Zeichnung sind in Fig. 1 bis 3 zwei Ausführungsbeispiele einer Spritzgieß- bzw. einer Spritzprägemaschine gemäß der Erfindung schmeatisch dargestellt.
Fig. 1 zeigt eine erste Maschine in einer Draufsicht,
Fig. 2 zeigt eine Einzelheit von Fig. 1, und
Fig. 3 zeigt eine zweite Maschine in einer perspektivischen Ansicht.

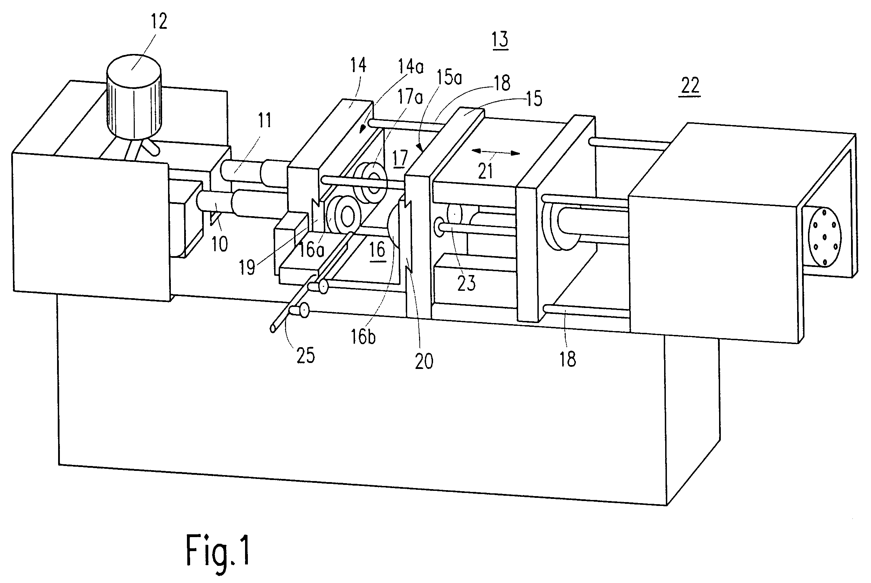

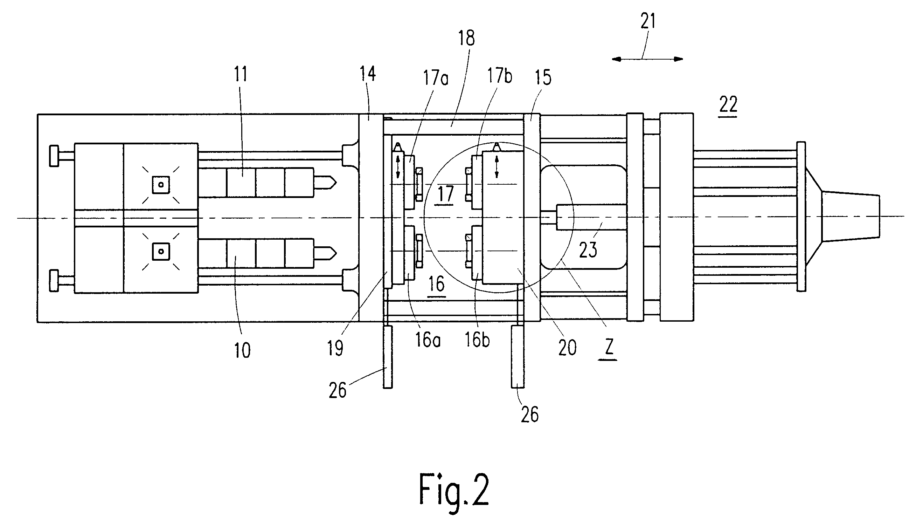

Die Maschine gemäß Fig. 1 besitzt zwei gesonderte, identisch aufgebaute Spritzaggregate 10a, b, die aus zwei Materialbehältern 11a, b gespeist werden. Die hydraulische Versorgung der Spritzaggregate 10a, b erfolgt hier über zwei getrennte Pumpensysteme 12a, b, die über einen Motor 13 angetrieben werden. Die Spritzaggregate 10a, b besitzen je einen separaten, hydraulischen Verteilerblock 14a, b mit Steuer- und Regelventilen 14c, deren Funktionen unabhängig voneinander durch eine Maschinensteuerung 15 vorgegeben werden. Mit 16 ist insgesamt eine Formeinrichtung bezeichnet, die eine feste Formplatte 17 und eine bewegliche Formplatte 18 aufweist. Die Formplatten 17, 18 besitzen horizontale, nicht dargestellte Gleitvorrichtungen zur Aufnahme von Formkörpern 19, 20, die mit Hilfe von Verschiebeeinrichtungen 21 in Richtung 22 aus der Maschine heraus und in die Maschine hinein gefahren werden können. Diese Verschiebeeinrichtungen 21 können z.B. hydraulisch, pneumatisch oder elektromechanisch angetrieben werden. Der feste Formkörper 19 trägt zwei Formteile 23a, 24a, und der bewegliche Formkörper 20 trägt zwei Formteile 23b, 24b. Die aus den Formteilen 23a, b und 24a, b gebildeten Formen 23 und 24 liegen nebeneinander in einer horizontalen Ebene und sind identisch aufgebaut. Die beweglichen Formteile 23b, 24b dienen zur Aufnahme jeweils einer Matrize 25. Eine Schließeinheit 26 dient zur Betätigung der auf Stangen 27 in Richtung 28 verschiebbaren beweglichen Formplatte 18. Mit 29 ist ein über Hydraulikschläuche 29a angeschlossener Antrieb für einen in Fig. 2 näher dargestellten Platten- und Angußausstoßer 30 bezeichnet.

Beim Preßvorgang wird die bewegliche Formplatte 18 von der Schließeinheit 26 in Richtung auf die feste Formplatte 17 bewegt. Gleichzeitig bewegen sich die Spritzaggregate 10a, b in Richtung auf die feste Formplatte 17. Dabei wird in die durch die Formen 23, 24 gebildeten Hohlräume über die Spritzaggregate 10, 11 Material eingespritzt, aus welchem die scheibenförmigen Informationsträger geformt werden.

Nach dem Preßvorgang wird die bewegliche Formplatte 18 etwas zurück bewegt, und der in Fig. 2 vergrößert dargestellte Platten- und Angußausstoßer 30 tritt in Funktion. Dieser enthält einen Bügel 31 mit zwei Stößeln 32, die in Bohrungen 18a der Formplatte 18 verschiebbar angeordnet sind. Ein jeweils durch eine Feder 33 belasteter Kolben 34 wirkt mit dem Ende des Stößels 32 zusammen und bewirkt bei Betätigung das Ausstoßen der in den Formen 23, 24 hergestellten Informationsplatten. Nach dem Ausstoßen werden diese Platten von einer Entnahmeeinrichtung entnommen, die in Fig. 1 schematisch mit 35 angedeutet ist. Diese greift mit entsprechenden Armen nach jedem Preßvorgang in die Maschine ein und entnimmt die Platten einschließlich ihrer abgetrennten Angüsse, sobald der Platten- und Angußausstoßer 30 die Platten gelöst hat.

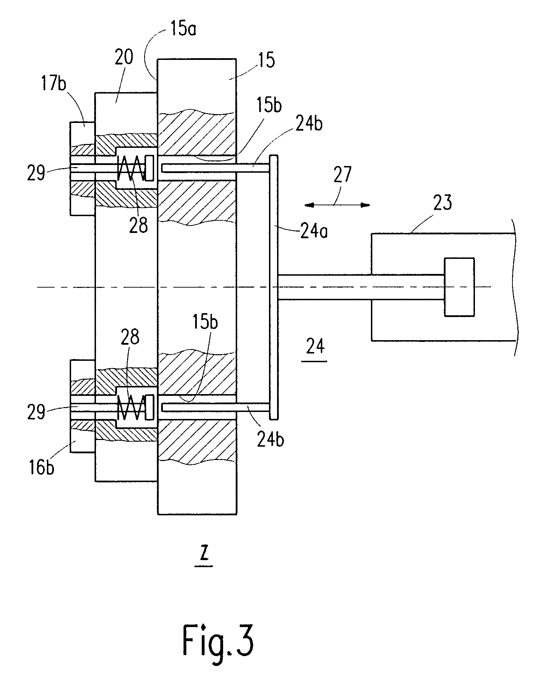

Fig. 3 zeigt ein weiteres Ausführungsbeispiel einer Maschine in perspektivischer Ansicht mit ebenfalls zwei getrennten Spritzaggregaten 10a', 10b'. Dabei sind gleiche Teile mit gleichen Bezugszeichen versehen. Im Gegensatz zum erstgenannten Ausführungsbeispiel ist hier nur ein Materialbehälter 11' vorgesehen. Die Stangen 27', auf denen die bewegliche Formplatte 18 gleitet, sind hier dünner dargestellt. Ferner sind schwalbenschwanzförmige Horizontal-Gleichtvorrichtungen 17a, 18a zur Aufnahme der Formkörper 19', 20' erkennbar. Seitlich neben der festen Formplatte 17 ist eine Teileentnahmeeinrichtung 35' angeordnet, die nach dem Preßvorgang gleichzeitig die in den Formen 23 und 24 gepreßten Platten entnimmt. Die Schließeinheit 26 ist hier von einer Haube 36 abgedeckt.

## Patentansprüche

1. Spritzgieß- oder Spritzprägemaschine zur Herstellung von scheibenförmigen Informationsträgern, z.B. CD's, mit einer Spritzeinrichtung (10 - 15), mit einer ein festes (17) und ein bewegliches (18) Teil aufweisenden Formeinrichtung (16) und mit einer Schließeinrichtung (26) für das bewegliche Teil (18) der Formeinrichtung (16),
gekennzeichnet durch
a) mindestens zwei nebeneinander angeordnete, separat montierte und temperierte Formen (23, 24), die jeweils ein festes und ein bewegliches Formteil (23a, b; 24a, b) aufweisen,
b) ein eigenes Spritzaggregat (10a, b) für jede Form (23, 24) und durch
c) eine einzige Schließeinheit (26) für alle Formen (23, 24).

2. Maschine nach Anspruch 1,
dadurch gekennzeichnet, daß die körperlich voneinander getrennten Spritzaggregate (10a, b) je einen separaten, hydraulischen Verteilerblock (14a, b) mit Steuer- und Regelventilen (14c) aufweisen, deren Funktionen unabhängig voneinander durch eine Maschinensteuerung (15) vorgegeben werden.

3. Maschine nach Anspruch 2,
dadurch gekennzeichnet, daß die Spritzaggregate (10a, b) in einer horizontalen Ebene in Bewegungsrichtung (28) des beweglichen Teiles (18) angeordnet sind und in der horizontalen Ebene symmetrisch zur Mitte der Schließeinheit (26) liegen.

4. Maschine nach einem der Ansprüche 1 bis 3,
dadurch gekennzeichnet, daß die hydraulische Versorgung der Spritzaggregate (10a, b) über zwei getrennte Pumpensysteme (12a, b) erfolgt.

5. Maschine nach einem der Ansprüche 1 bis 4,
dadurch gekennzeichnet, daß die festen und beweglichen Formteile (23a, 24a; 23b, 24b) jeweils auf einem gemeinsamen Formkörper (19, 20) angeordnet sind und daß die Formkörper (19, 20) jeweils quer zur Schließrichtung (28) in Formplatten (17, 18) einschiebbar ausgebildet sind.

6. Maschine nach Anspruch 5,
dadurch gekennzeichnet, daß hydraulisch, pneumatisch oder elektromechanisch angetriebene Verschiebeeinrichtungen (21) für die Formkörper (19, 20) vorgesehen sind.

7. Maschine nach einem der Ansprüche 1 bis 6,
dadurch gekennzeichnet, daß die bewegliche Formplatte (18) einen Antrieb (29) für einen Platten- und Angußausstoßer (30) aufweist, der körperlich keine feste Verbindung mit dem Formkörper (20) hat und bündig mit der Aufspannfläche (18b) der Formplatte (18) abschließt.

8. Maschine nach einem der Ansprüche 1 bis 7,
gekennzeichnet durch eine für alle gefertigten Informationsplatten einschließlich ihrer abgetrennten Angüsse ausgebildete gemeinsame Entnahmeeinrichtung (35).

9. Machine nach einem der Ansprüche 1 bis 8,
dadurch gekennzeichnet, daß die Schließeinheit (26) mit einer für alle Formen (23, 24) angepaßten Schließkraft einstellbar ausgebildet ist.

10. Maschine nach einem der Ansprüche 1 bis 9,
dadurch gekennzeichnet, daß die Formeinrichtung (16) zwei nebeneinander angeordnete, in einer horizontalen Ebene liegende Formen (23, 24) aufweist, denen jeweils ein eigenes Spritzaggregat (10a, b) zugeordnet ist.

11. Verfahren zur Herstellung scheibenförmiger Informationsträger mittels eines Spritzgieß- oder Spritzprägeverfahrens auf einer Maschine nach einem der Ansprüche 1 bis 10, dadurch gekennzeichnet,
a) daß die bewegliche Formplatte (18) und alle Spritzaggregate (10a, b) gemeinsam aktiviert werden,
b) daß alle Formen (23, 24) gemeinsam geschlossen werden, indem die einzige Schließeinheit (26) die bewegliche Formplatte mit den beweglichen Formteilen (23b, 24b) auf die festen Formteile (23a, 24a) preßt,
c) daß alle Formen gleichzeitig mit Preßmaterial gefüllt werden,
d) daß die bewegliche Formplatte (18) nach dem Preßvorgang um einen bestimmten Betrag zurückbewegt wird,
e) daß die gepreßten Platten nach Aktivierung des Angußausstoßers (30) von der Entnahmeeinrichtung (35) entnommen werden und
f) daß durch erneutes Aktivieren der beweglichen Formplatte (18) und der Spritzaggregate (10a, b) ein erneuter Preßvorgang eingeleitet wird.
